# EUROPÄISCHE PATENTSCHRIFT

(11) **EP 1 866 589 B1**
(45) Veröffentlichungstag und Bekanntmachung des Hinweises auf die Patenterteilung: **02.09.2009**
(21) Anmeldenummer: 06723278.5
(22) Anmeldetag: 08.03.2006
(51) Int. Cl.: F27D 17/00

(54) **VERFAHREN UND VORRICHTUNG ZUR BEHANDLUNG VON ABGAS AUS SINTERANLAGEN**
METHOD AND DEVICE FOR TREATING WASTE GAS FROM SINTER INSTALLATIONS
PROCEDE ET DISPOSITIF POUR TRAITER DES GAZ BRULES DEGAGES D'INSTALLATIONS DE FRITTAGE

(30) Priorität: 24.03.2005 AT 5112005
(43) Veröffentlichungstag der Anmeldung: 19.12.2007
(73) Patentinhaber: Siemens VAI Metals Technologies GmbH & Co, 4031 Linz (AT)
(72) Erfinder: FLEISCHANDERL, Alexander, A-4655 Grünau (AT); NEUHOLD, Robert, A-9523 Villach (AT)
(74) Vertreter: Maier, Daniel Oliver
(86) Internationale Anmeldenummer: PCT/EP2006/002111
(87) Internationale Veröffentlichungsnummer: WO 2006/099948

(56) Entgegenhaltungen:
- DE-A1- 19 623 981
- DE-C1- 4 105 510
- US-A- 5 620 673
- US-A- 5 659 110
- ELMAR SCHUSTER; JOHANN ZIRNGAST; HUBERT ZELLER; JOHANN PÖSSLER: "3rd International Conference on Science and Technology of Iron Making (ICSTI), METEC Düsseldorf" METEC CONGRESS 03, 20. Juni 2003 (2003-06-20), Seiten 574-577, XP009067469 Düsseldorf

## Beschreibung

Die Erfindung betrifft ein Verfahren und eine Vorrichtung zur Behandlung von Abgas aus Sinteranlagen, bei welchem dem Abgas aus einer Sinteranlage in einem Abgaskanal trockenes Additiv bestehend zumindest aus Adsorptionsmittel und Rezirkulat im Flugstromverfahren zugegeben wird und das Additiv anschließend aus dem Abgas durch Gewebefilter abgeschieden und zumindest teilweise rezirkuliert wird.

Als Sinteranlagen kommen insbesondere Sinteranlagen für Eisenerz in Frage, wobei die gesinterten Erze in der Stahlerzeugung zum Einsatz kommen.

Unter Flugstromverfahren versteht man Verfahren, wo Additiv einem In einer vorgegebenen Richtung strömenden Abgasstrom zugegeben wird, das Additiv mit dem Abgasstrom mitgenommen wird und es während dieses Transportes zu Reaktionen zwischen Additiv und Bestandteilen des Abgases kommt. Im Gegensatz dazu ist ein Wirbeischichtverfahren zu sehen, bei dem das Abgas in einem Reaktor verwirbelt wird und daher nicht in einer vorgegebenen Richtung strömt.

Beim Flugstromverfahren beträgt die mittlere Verweilzeit des Additivs im Abgaskanal einige Sekunden. Sie wird z.B. bei der Anlage gemäß der Fig. etwa zweig Sekunden für Additiv aus der Eingabestelle 5 betragen, für Additiv aus der Eingabestelle 4 etwa zehn Sekunden. Die mittlere Verweilzeit von Additiv im Wirbelschichtverfahren liegt darüber.

Die Feststoffbeladung beim Flugstromverfahren liegt zwischen 1 bis 50 g/Nm³ (wobei der Anteil von frischem Additiv, also Adsorptionsmittel und gegebenenfalls Reagenz, zwischen 100 und 3000 mg/Nm³ liegt) und ist damit deutlich geringer als bei einem Wirbelschichtverfahren. Dort beträgt die Menge an Feststoffen etwa das 20-50fache von jenem beim Flugstromverfahren.

Unter dem Begriff Gewebefilter werden Schlauchfilter, Taschenfilter, Tuchfilter, Textilfilter und Filter aus metallischem Gewebe subsumiert.

Umweltbehörden widmen heute das Hauptaugenmerk bei einem integrierten Hüttenwerk den Sinteranlagen. Grund dafür ist, dass Sinteranlagen aufgrund der riesigen Abgasmengen (üblich 300.000.-1.000.000 Nm³/h) für einen erheblichen Anteil an Schadstoffemissionen eines integrierten Hüttenwerks verantwortlich sind. Vor allem Feinstäube und Aerosole (Salze) sowie Schwermetalle (Hg, Pb, Cd), organische Emissionen, wie Dioxine/Furane, VOC, PAC und saure Komponenten wie Schwefeldioxid/trioxid, HCl und HF stellen mögliche Problemherde dar.

US 5,620,673 und DE 19623981 A1 offenbaren Verfahren zum Entfernen schädlicher Stoffe aus Abgasen von Sinteranlagen.

Aus der Veröffentlichung, "Improved flue-gas cleaning by bag filter at the sinter strand of voestalpine Stahl Donawitz", by Elmar Schuster, Johann Zimgast, Hubert Zeller and Johann Pössier, 3rd International Conference on Science and Technology of Iron Making (ICSTI), 16.-20. Juni 2003, METEC Düsseldorf, Seiten 574-577, ist ein Verfahren und eine Vorrichtung bekannt, wo Abgas aus einer Sinteranlage durch einen Abgaskanal und einen sogenannten Kugelrotor geleitet wird, eine zylindrische Trommel aus einer perforierten Platte, in der Keramikkugeln enthalten sind. In diese Trommel werden durch Schneckenförderer Additiv, nämlich frisches Additiv und Rezirkulat, gespeist, sodass das Abgas beim Passieren des Kugelrotors mit dem Additivstaub angereichert wird. Im anschließenden Reaktor kommt es bereits zu Reaktionen zwischen Additiv und Gasbestandtellen, bevor der Additivstaub des Abgases an Schlauchfiltem abgeschleden wird. Allerdings findet eine Reaktion im Flugstrom nur sehr eingeschränkt statt, da die Relativgeschwindigkeit zwischen Abgas und Additiv gering ist. Auch ist die Additivverteilung nicht sehr homogen.

Eine Aufgabe der vorliegenden Erfindung besteht nun darin, die bekannten Verfahren und Vorrichtungen so zu verbessem, dass die Reaktionsrate zwischen Abgas und Additiv erhöht wird.

Diese Aufgabe wird durch ein Verfahren gemäß Anspruch 1 bzw. durch eine Vorrichtung gemäß Anspruch 12 gelöst. Vortelhafte Ausgestaltungen der Erfindung sind in den abhängigen Ansprüchen festgehalten.

Dadurch, dass Additiv an zumindest einer Stelle entgegen der Strömungsrichtung des Abgases eingebracht wird, wird die Relativgeschwindigkeit zwischen Abgas und Additiv erhöht und damit die Reaktionsrate zwischen Additiv und Abgas. Besonders wirksam ist hierbei eine Relativgeschwindigkeit von zumindest 30 m/s zwischen Additiv und Abgas.

Wenn vorgesehen ist, dass Additiv an mehreren Stellen längs der Strömungsrichtung des Abgases eingebracht wird, so können jeweils kleinere Mengen an Additiv zugesetzt werden, die besser verteilt werden können als wenn einmal eine große Menge Additiv zugesetzt wird. Insbesondere kann vorgesehen sein, dass Additiv vor und nach einer Erweiterung des Abgaskanals eingebracht wird, weil dort die Gasgeschwindigkeit höher ist als in der Erweiterung.

Eine Ausgestaltung der Erfindung besteht darin, dass Additiv zumindest in einem bestimmten Querschnitt des Abgaskanals an mehreren über den Querschnitt verteilten Stellen eingebracht wird. Dadurch kann eine homogenere Verteilung des Additive über den Querschnitt des Abgaskanals und damit eine bessere Ausnützung des Additivs sichergestellt werden, sodass das Additiv gleichmäßig verbraucht wird und nicht in einigen Bereichen des Abgaskanalquerschnitts das Additiv vollkommen verbraucht und in anderen Bereichen unvollständig verbraucht ist.

Vorteilhaft ist, wenn das Additiv über zumindest eine Lanze eingebracht wird. Eine Lanze ist ein schlankes Rohr, durch welches das Additiv in das Abgas eingebracht wird. Das Rohr kann etwa normal zur Oberfläche des Abgaskanals in diesen ragen und am Ende entgegen der Strömungsrichtung des Abgases gebogen sein.

Das Additiv enthält zumindest Adsorptionsmittel, wie Koks oder Aktivkohle, und kann zusätzlich Reagenz, wie Kalk oder Kalkhydrat, enthalten. Mit dem Adsorptionsmittel können Schadkomponenten wie Schwermetalle und organische Stoffe adsorbtiv gebunden werden, mit dem Reagenz können saure Komponenten, wie SO₂, SO₃, HCl, HF, abgeschieden werden.

Rezirkulat und frisches Adsorptionsmittel/Reagenz werden an verschiedenen Stellen eingebracht. Dadurch können die Mengen unabhängig voneinander verändert werden, was zu einer besseren Ausnützung des Additivs führt. Schadgasspitzen können auf diese Weise besser abgefangen werden, weil Adsorptionsmittel und gegebenenfalls Reagenz gezielt und dosiert zugeführt werden können.

Adsorptionsmittel und/oder Reagenz werden vor Rezirkulat eingebracht. Dadurch trifft das frische Adsorptionsmittel und/oder Reagenz auf das noch nicht gereinigte Abgas mit hoher Schadstoffkonzentration, während das schon teilweise ausreagierte Rezirkulat auf das bereits teilweise gereinigte Abgas mit niedrigerem Schadstoffanteil trifft.

Insbesondere kann vorgesehen werden, dass Adsorptionsmittel in Abhängigkeit vom Anteil der kondensierbaren organischen Verbindungen und/oder vom Anteil der Schwermetalle eingebracht wird, und/oder dass in Abhängigkeit vom Anteil der sauren Bestandteile (insbesondere Schwefeldioxid) im Abgas Reagenz eingebracht und/oder das Abgas gekühlt und/oder befeuchtet wird.

Das Abgas kann konditioniert werden, indem das Abgas durch Eindüsen oder Zerstäuben von Wasser in den Abgasstrom unabhängig von der Zugabe von Additiv geregelt gekühlt und/oder befeuchtet wird.

Wenn vorgesehen wird, dass das Wasser mit einer definierten maximalen Tropfengröße eingebracht wird, dann kann sichergestellt werden, dass das Wasser innerhalb einer bestimmten Strecke, insbesondere vor der nächsten Gasumlenkung oder Querschnittsveränderung des Abgaskanals, verdampft. Anbackungen infolge von Wasserablagerung an den Wänden des Abgaskanals werden somit vermieden. Als vorteilhaft hat sich hier ein maximaler Tropfendurchmesser von kleiner 200 µm herausgestellt.

Alternativ zur Eindüsung oder Zerstäubung von Wasser kann vorgesehen werden, dass das Abgas durch Eindüsen von Suspension/Lösung, wie einer Suspension von Kalkhydrat in Wasser, in den Abgasstrom in einer Erweiterung des Abgaskanals geregelt gekühlt und/oder befeuchtet wird. Dann braucht kein Reagenz als trockenes Additiv mehr beigegeben werden. Bezüglich der Tropfengröße gilt dasselbe wie für Wasser.

Wenn vorgesehen wird, dass dem Abgas vor dem Eindüsen von Wasser Additiv, insbesondere Reagenz, zugegeben wird, so kann die Chemisorption, insbesondere die Entschwefelungsleistung, durch den Wasserfilm an der Grenzfläche Gas/Feststoff erhöht werden, weil damit der Stoffübergang verbessert wird.

Die Erfindung wird anhand der angeschlossenen Figur, die eine erfindungsgemäße Vorrichtung zeigen, beispielhaft und schematisch dargestellt, und anhand der folgenden Beschreibung erläutert.

Aus einer Sinteranlage wird das Abgas 6, in vorteilhafter Weise über einen Elektrofilter und ein Prozessgasgebläse, in den Abgaskanal 2a eingebracht. Der zur Behandlung der Abgase notwendige Unterdruck (Druckverlust der erfindungsgemäßen Anlage) wird durch ein Stützgebläse 14 gewährleistet. Der als Flugstromreaktor dienende Abgaskanal 2a erweitert sich nach einem waagrechten Abschnitt zu einem Gaskonditionierer 1. Dieser ist von seiner Länge und seinem Durchmesser so dimensioniert, dass über die Wasserzufuhr 18 in Tropfenform mit bestimmtem Höchstdurchmesser zugeführtes Wasser innerhalb des Gaskonditionierers 1 weitestgehend verdampfen kann. Wichtig ist, dass die Tropfen vor der nächsten Gasumlenkung verdampft sind. Im Gaskonditionierer 1 wird das Abgas senkrecht nach unten geleitet. Vom unteren Ende des Gaskonditionierers 1 setzt sich wieder die verjüngte als Flugstromreaktor dienende Abgasleitung 2b waagrecht fort und mündet schließlich in den Gewebefilter 3. Die Abgasleitung 2a, 2b muss natürlich nicht waagrecht ausgerichtet sein, ebenso muss der Gaskonditionierer 1 nicht streng senkrecht ausgerichtet sein, sollte aber sinnvoller Weise einen senkrechten Richtungsanteil haben.

Die Aufweitung und Umlenkung des Abgaskanals 2a, 2b ist so dimensioniert, dass eine weitgehend laminare gerichtete Strömung erzielt wird, dass Anbackungen und Rückströmungen verhindert werden und eine homogene Geschwindigkeitsvertellung über den Querschnitt erreicht wird. Die jewelligen Maßnahmen hierzu sind dem Fachmann bekannt, so können etwa Umlenkbleche 30 vorgesehen werden.

Frisches Additiv wird einerseits als Reagenz in den Silo 7 eingebracht und dort gelagert, andererseite als Adsorptionsmittel in den Silo 8 eingebracht und gelagert. Der Materialabzug aus den Silos 7, 8 erfolgt über Zellradschleusen. Diese fördem in die jeweiligen Doslerbehälter 9, 10. Diese Dosierbehälter sind verwogen und mit Niveausonden ausgestattet.

Das in die Dosierbehälter 9, 10 eingefüllte Adsorptionsmittel bzw. Reagenz wird über Dosierschnecken mengengenau geregelt in eine gemeinsame Zuführleitung 12 eingebracht, wenn die Drehschurre 31 nach rechts ausgerichtet ist, und ersetzt das über die Reststoffausschleusung in den Reststoffsilo 11 ausgetragene verbrauchte Adsorptionsmittel und Reagenz. In der Zuführleitung 12 wird das Adsorptionsmittel und Reagenz mittels Druckluft 13 zu den Zuführeinrichtungen 4 gefördert. Es wird dort mittels Verdünnungsluft eines Verdünnungsluftgebläses 28 über den Luftverteiler 16 den Lanzen der Zuführeinrichtungen 4 zugeführt, welche in den Flugstromreaktor 2a des Abgaskanals münden. Das Adsorptionsmittel und Reagenz wird im Gegenstrom unter hoher Relativgeschwindigkeit eingedüst. Die Abgasgeschwindigkeit beträgt an dieser Stelle etwa 15-26 m/s, die Eindüsgeschwindigkeit 15-50 m/s, sodass eine Relativgeschwindigkeit von 30-75 m/s, insbesondere 40-60 m/s erreicht wird.

Das Adsorptionsmittel ist in diesem Beispiel trockener Herdofenkoks (HOK) mit einem Schüttgewicht von etwa 0,65 g/cm² und einer Korngrößenverteilung von d₉₀ etwa 50 µm.

Das Reagenz ist in diesem Beispiel trockenes Kalkhydrat mit einem Schüttgewicht von ca. 0,5 g/cm³ und einer Korngrößenverteilung von d₉₀ etwa so µm.

Optional ist nach den Zuführeinrichtungen 4 eine Zuführeinrichtung 17 für Rezirkulat vorgesehen.

Der Gaskonditionierer 1 dient zum Einen der Kühlung des Abgasstroms bei Temperaturspitzen (Gaskonditionierung), um die Filterschläuche des Gewebefilters 3 keiner zu hohen Temperatur auszusetzen, und zum Anderen als Reaktionsraum für Absorptions und Chemisorptionsreaktionen. Der Reaktor ist so dimensioniert, dass sich Partikel im Wesentlichen nicht absetzen können und somit mit dem Abgas zum Gewebefilter 3 mitgenommen werden, aber eine ausreichende Verweilzeit für eine gute Adsorptions/Sorptlonsreaktion garantiert wird.

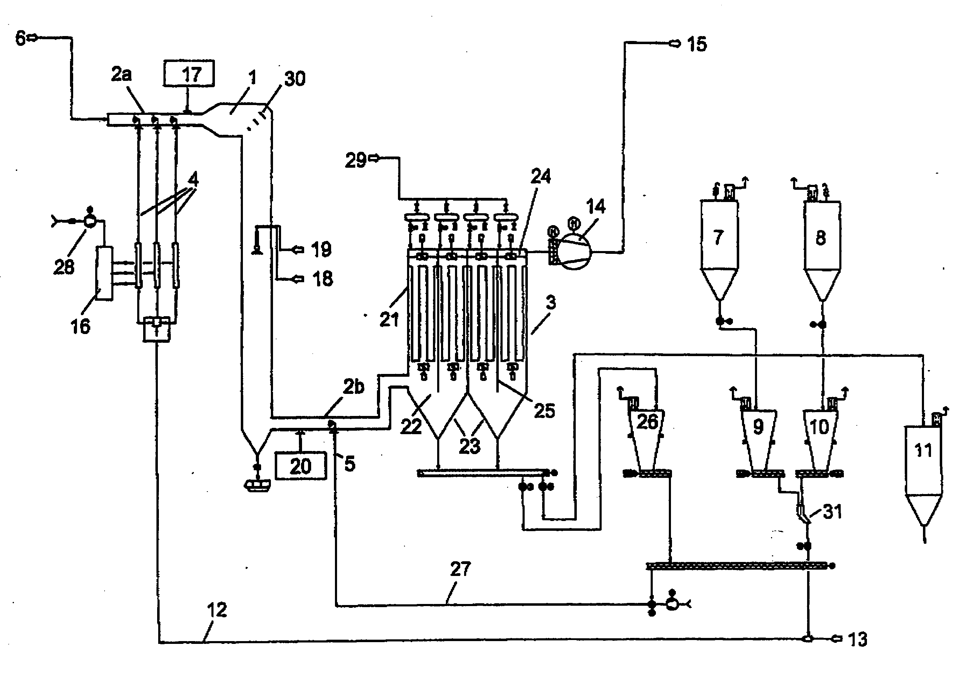

Durch Eindüsung von Wasser, Suspension (Kalkhydrat/Wasser) oder Lösung über die Wasserzufuhr 18 und die Druckluftzuführ 19 im Gleichstrom zum Abgas wird eine stabile Temperatur/Feuchte im konditionierten Gasstrom erreicht. Die Einbringung kann wie in der Figur dargestellt über 2-Stoffdüsen, aber auch über Rotationszerstäuber erfolgen. Es können auch Einstoffdüsen verwendet werden, die allerdings einen großen Tropfendurchmesser bedingen, sodass Einstoffdüsen bei sehr heißem Abgas alternativ zum Einsatz kommen könnten.

Wenn Suspension/Lösung, welche ein Reagenz enthält, eingebracht wird, dann kann das trocken zugegebene Additiv nur Adsorptionsmittel und kein Reagenz enthalten.

Bei 2-Stoffdüsen wird das Wasser/die Suspension/die Lösung mit einem Medium (Druckluft, Stickstoff oder Dampf) in feinsten Tröpfchennebel zerrissen. Die erzeugten Tröpfchen müssen so fein sein, dass auch die größten erzeugten Tröpfchen möglichst vollständig innerhalb der vorgegebenen Verdampfungsstrecke (=bis zum Ende des Gaskonditionierers 1 bzw. der nächsten Umlenkung) verdampfen, ansonsten sind in Umlenkungen, etc. Anbackungen (Salze, usw.) zu erwarten. Eine Regelung (über den Gasdruck) umfasst die Gewährleistung eines maximalen Tropfendurchmessers und einer konstanten Konditioniertemperatur des Gasstroms. Der maximale Tropfendurchmesser liegt vorzugsweise zwischen 50 und 200 µm, insbesondere zwischen 100 und 150 µm.

Bei Rotationszerstäubern wird das Wasser/die Suspension/die Lösung auf einem schnell rotierenden Rotationszerstäuber in feinste Tröpfchen zerstäubt, welche innerhalb des Verdampfungsraums (Verdampfungsstrecke) möglichst vollkommen verdampfen. Rotationszerstäuber bedingen höhere Investitionskosten, sind aber besser geeignet für die Suspensions-/ Lösungseinbringung, wobei die Einbringung von Suspension/Lösung für hohe Abscheidegrade der sauren Komponenten (z.B. Entschwefelung bis 98%) zu bevorzugen ist.

Die erfindungsgemäße getrennte Einbringung von Wasser bzw. Suspension/Lösung einerseits und Additiv andererseits ist der Anfeuchtung des Rezirkulats überlegen: dieses Anfeuchten ist limitiert, da das Rezirkulat mechanisch oder pneumatisch gefördert wird und deshalb rieselfähig sein muss bzw. nicht backend sein darf. Da die Rezirkulatmenge üblicherweise unter Betriebsbedingungen konstant gehalten wird, ist auch die Wassermenge, die zur Konditionierung des Abgasstroms eingebracht werden kann, limitiert (3-4% des Massenstroms an Rezirkulat). Damit kann die Konditionierungstemperatur nicht konstant gehalten (=geregelt werden). Bei Temperaturspitzen im Rohgas, erhöht sich auch die Konditionierungstemperatur entsprechend. Eine höhere Temperatur bzw. geringere Feuchte im Gasstrom beeinflusst das Entschwefelungsverhalten (Chemisorptionsverhalten) als auch das Adsorptionsverhalten für die Schadkomponenten. Emissionspitzen sind die Folge. Aus diesem Grund müsste auch die im Kreis geführte Rezirkulatmenge entsprechend hoch gewählt werden, was hohe Investment- und Betriebskosten bedingt. Zusätzlich käme es durch die Anfeuchtung des Rezirkulats durch den hohen Chloridgehalt des Rezirkulats zu Korrosionserscheinungen, teure Werkstoffe wären notwendig.

Direkt nach dem Gaskonditionierer 1 wird in den Abgasstrom im hier waagrechten Stück des Abgaskanals 2b Rezirkulat über die Zugabeeinrichtung 5 entgegen der Richtung des Abgasstroms eingebracht. Auch hier wird eine Relativgeschwindigkeit von 30-75 m/s, insbesondere von 40-60 m/s erreicht. Optional ist vor der Zuführeinrichtung 5 eine Zuführeinrichtung 20 für frisches Adsorptionsmittel und gegebenenfalls Reagenzvorgesehen.

Anschließend gelangt das Abgas in den Gewebefilter 3. Die wesentliche Aufgabe des Gewebefilters ist die Abscheidung der mit dem Abgas mittransportierten Feststoffe. Diese bestehen aus Sinterstaub, Reaktionsprodukt, unverbrauchtem Reagenz, Adsorptionsmittel und rezirkuliertem Reststoff.

Damit die sehr feinen Staubanteile sowie organische Abgaskomponenten nicht in das eigentliche Filtertuch eindringen, sich dort ablagern und damit den Druckverlust sehr rasch ansteigen lassen (Tiefenfiltration - führt zur Aufsättigung der Schläuche), ist das Filtertuch mit einer feinporigen Kunststoffmembrane oder -beschichtung oder einer Imprägnierung ausgestattet. Diese bewirkt, dass sich die Staubteilchen an der Oberfläche ablagern und einen Filterkuchen aufbauen, der in weiterer Folge die eigentliche Filtrationswirkung übernimmt (=Oberflächenfiltration).

Das Filtertuch muss weiters folgende Eigenschaften haben:
- Hydrolysebeständigkeit, da das Abgase eine hohe Feuchtigkeit von 5-15% aufweist,
- Beständigkeit gegenüber sauren Komponenten (HCl, HF, SO₂SO₃) und basischen Komponenten (Kalk)
- Beständigkeit gegenüber organischen Komponenten
- Oxidationsbeständigkeit (Sauerstoffgehalt)
- Rückhaltevermögen für submikrone Partikel (< 1 µm, z.B. KCl)
- Beständigkeit für hohe Temperaturen (Betriebs- und Spitzentemperatur bis 200 °C)

Hygroskopische und klebende Stäube sind beherrschbar, da zur Begrenzung der Abgasfeuchte die kritischen, technologischen Anlagenteile begleitbeheizt sind und dadurch auf einer Temperatur größer 100°C gehalten werden.

Für das Filtergewebe wird beispielsweise Glasfasergewebe mit PTFE(Polytetrafluorethylen)-Beschichtung verwendet oder Aramid mit PTFE-Beschichtung.

Damit bereits vor der ersten Beaufschlagung mit Abgas eine gewisse derartige Filterhilfeschicht vorhanden ist, wird das Gewebefilter 3 mit Hilfsstoffen, z.B. mit einem Kalk-Kohle-Gemisch mit Zusatzstoffen, das etwa unterdem Markennamen Sorbalit® bekannt ist, vorbeschichtet. Diese Schicht bindet auch Feuchtigkeit, welche beim Anfahrprozess aus dem Abgas kondensiert und verhindert so eine Beschädigung des Filtertuchs. Eine Einrichtung, um Material zur Vorbeschichtung einzubringen, ist vorgesehen, aber in der Figur nicht dargestellt.

Der eingesetzte Gewebefilter 3 besteht im Wesentlichen aus dem Filtergehäuse 21 mit den Filterschläuchen, der Rohgaskammer 22, den Austragstrichtern 23 und der Reingaskammer 24.

Das staubbeladene Abgas gelangt über den Rohgaseintrittskanal in die Rohgaskammer 22. Dabei wird die Gasgeschwindigkeit reduziert und die Staubteilchen werden an der Gasverteilerwand 25 gleichmäßig verteilt. Der Gasweg wird durch die Kopfplatte (Schlauchboden) versperrt, so dass der gesamte Gasstrom nur durch die Filterschläuche über Reingasklappe und Reingaskammer 24 zur Reingasleitung 15 gelangen kann, die zum Kamin führt.

An den von außen angeströmten Filterschläuchen bleibt der Staub haften und bildet den Filterkuchen. Dieser bewirkt den eigentlichen Filtereffekt. Mit ansteigender Staubbeladung der Schläuche steigt aber auch der zu überbrückende Filterwiderstand stetig an. Um diesen auf wirtschaftlichem Niveau zu halten, müssen die Filtermedien von Zeit zu Zeit abgereinigt werden. Dies geschieht mit Hilfe des Abreinigungssystems. Über ein vorgesteuertes Ventil gelangt Druckluft 29 aus einem Druckluftverteilrohr in die jeder Schlauchreihe zugeordneten Blasrohre, sodass jeder Schlauch gleichmäßig abgereinigt wird. Durch kurze, regelmäßige Druckluftimpulse, verstärkt durch einen zusätzlichen Venturi-Injektor, wird die anhaftende Staubschicht weitgehend abgesprengt. Venturidüsen und Blasrohrdüsen werden zur Optimierung des Druckluftbedarfs eingesetzt. Ein innen liegender Stützkorb hält den Filterschlauch dabei in Form. Bei der Abreinigung der Filterschläuche fällt der Staub zwischen den Fifterschläuchen in die Austragstrichter 23 und wird von dort kontinuierlich über Austragsorgane abgezogen. Vibratoren an der Trichterwand erleichtern den Staubaustrag.

Ein Teil des Staubes wird ausgeschleust und in einen Reststoffsilo 11 gefördert. Der überwiegende Anteil wird wieder in den Flugstromreaktor 2b rezirkuliert. Dabei wird das aus dem Gewebefilter 3 mittels mechanischen Förderern ausgetragene Rezirkulat über ein Dosiersystem 26 mittels Schneckenförderern der Zuführleitung 27 für Rezirkulat zugeführt. Das Rezirkulat wird mit Förderluft zu den Lanzen der Zuführeinrichtung 5 transportiert und dort wieder in den Abgasstrom eingeblasen. Die Förderluft wird von einem Förderluftgebläse erzeugt. Durch das Dosiersystem 26 wird ein konstanter Materialstrom gewährleistet.

Das Rezirkulat ist trocken und hat ein Schüttgewicht von ca. 0,5 g/cm³ und eine Korngrößenverteilung von dem etwa 50 µm.

Durch die Rezirkulation gelangen auch die im Reststoff noch nutzbaren Anteile von nicht reagiertem Reagenz, sowie das nur wenig beladene Adsorptionsmittel nochmals in den Kreislauf und in den Gewebefilter 3. Dies verringert den Reagenz-Verbrauch bzw. bringt eine wesentliche Verbesserung der Schadstoffabscheidung durch Adsorption durch Erhöhung der Adsorptionsmittel-Konzentration im Abgas mit sich.

Um eine homogene Verteilung über den gesamten Abgasquerschnitt zu erreichen, wird das Rezirkulat im Gegenstrom unter hoher Relativgeschwindigkeit eingedüst.

Die Rezirkulation von Gewebefilterstaub bewirkt aber auch eine verbesserte Abscheidung der Feinstäube am Gewebefilter 3. Die submikronen Staubkömer wurden bereits koaguliert. Dementsprechend steigt der mittlere Korndurchmesser der abzuscheidenden Partikel an.

Die Abscheidung der Schadstoffe beim Flugstromverfahren geht wie folgt vor sich: Das Adsorptionsmittel nimmt organische Komponenten und Schwermetalle auf. Bei der Abscheidung von sauren Komponenten reagiert das Reagenz teilweise mit diesen Bestandteilen durch Adsorption (Chemisorption) im Flugstrom. Z.B. reagiert bei der Entschwefelung das Schwefeldioxid im Abgasstrom teilweise - bei Verwendung von gelöschtem Kalk als Reagenz - zu feinem Ca-Sulfit bzw. zu Gips. Folgende Reaktionen laufen dabei ab:

| | |
|---|---|
| 2 Ca(OH)₂ + 2 SO₂ | → 2 CaSO₃ • ½ H₂O + H₂O |
| 2 CaSO₃ • ½ H₂O + O₂ + 3H₂O | → 2 CaSO₄ • 2 H₂O (teilweise) |
| 2 Ca(OH)₂ + 2HCl | → CaCl₂ • 2H₂O |
| 2 Ca(OH)₂ + 2 HF | → CaF₂ + 2H₂O |

Die Absorption (Chemisorption) ist ein Verfahrensschritt bei dem Gase durch einen Feststoff oder eine Waschflüssigkeit chemisch gebunden werden. Wird das Abgas mit feuchtem Ca(OH)₂ in Kontakt gebracht, reagieren die sauren Abgasbestandteile SO₂, SO₃, HCl und HF chemisch mit diesem Reagens und bilden trockene Feststoffe als Produkt. Diese Feststoffe werden anschließend im Gewebefilter 3 aus dem Abgasstrom entfernt.

Um die gewünschte Abscheideleistung der sauren Komponenten zu erzielen, ist es notwendig, das Reagenz zu dosieren und gegebenenfalls das Gas zu konditionieren (Erhöhung der Feuchte). Als Reagenz kommt vorrangig gelöschter Kalk zur Anwendung.

Durch Adsorption werden die organischen Komponenten (Dioxine, Furane, VOC, PAC) sowie die im Abgas enthaltenen Schwermetalle (vorrangig Hg, Cd) abgeschieden, indem diese nach Diffusion in die Porenkanäle adsorptiv gebunden werden. Der beispielhaft zum Einsatz kommende Herdofenkoks (HOK) weist ein extrem großes Porenvolumen auf und bindet diese Schadkomponenten im Inneren des Korns. Die Adsorption kann noch durch chemische Vorgänge in den Poren des HOK verstärkt werden, z.B. setzt sich noch vorhandenes SO₂ im Abgas in gewissem Umfang zu Schwefelsäure oder schwefeliger Säure um, mit der wiederum Schwermetalle (metallisches Hg) reagieren. Der HOK wird hier zusammen mit dem Reagenz eingedüst und am Gewebefilter 3 abgeschieden.

Schwermetalle gelangen über die Primärstoffe (Erz und Zuschlagsstoffe), sowie über Recyclingmaterial (Stäube/Schlämme) in das Abgas der Sinteranlage. Hg kommt eine besondere Bedeutung zu, da es sowohl metallisch (Dampf) als auch als Salz vorkommt. Hg₂Cl₂(Hg+) kann bei Kontakt mit Wasser (Redoxpotential abhängig) In Hg(0) und Hg(2+) disproportionieren. Hg(0) kann nur durch Adsorption gebunden werden. Hg(2+) liegt als Salz partikulär vor. Hg kann kontinuierlich im Gasstrom gemessen werden. Z.B können durch Anpassung der Dosierung des Adsorbens Emissionsspitzen bzw. - überschreitungen) verhindert werden.

Organische Verbindungen (VOC = volantile organic compounds & PAC = polyaromatic compounds) stammen aus dem in der Sintermischung vorhandenen nicht vollständig verbrannten Verbindungen des eingesetzten Reduktionsmittels, Brennern (Zündhaube, Gaswiederaufheizung, etc.) oder verwerteten Reststoffen (Stäuben/Schlämme/Zunder). Die kondensierbaren organischen Anteile in diesem Gasgemisch können an/in dem Filtermaterial des Gewebefilters 3 kondensieren und irreversible Schäden an dem Filtermaterial hervorrufen (Reduktion der Gasdurchlässigkeit, Erhöhung des spezifischen Druckverlusts, damit verbunden weniger Gasdurchsatz, häufigere Abreinigungsvorgänge, etc.). Eine verkürzte Standzeit des Filtermaterials ist die Folge und damit erhöhte Betriebskosten.

Um diese Nachteile zu beseitigen ist es zielführend, die Konzentration an kondensierbaren organischen Komponenten im Gasstrom vor und/oder nach Einbringung des Adsorptionsmittels regelmäßig zu messen. So kann die Menge an notwendigem Adsorptionsmittel der o.a. Belastung angepasst werden, d.h. es ist soviel Adsorptionsmittel, frisch bzw. aus Rezirkulat, notwendig, dass der unter Betriebsbedingungen kondensierbare Anteil der organischen Anteile weitgehend an dem Adsorptionsmittel gebunden wird. Damit kann die Standzeit des Filtermaterials wesentlich erhöht werden.

Dazu ist es vorteilhaft, wenn eine Regelung vorgesehen ist, mit der unabhängig von einander die Mengen an Wasser, Suspension oder Lösung, die Menge an Rezirkulat und die Menge an frischem Additiv geregelt werden können, und zwar in Abhängigkeit von der Beschaffenheit des rohen und/oder des gereinigten Abgases (des Roh- und Reingases). Die Beschaffenheit des Abgases kann Temperatur, Feuchte und Gehalt an verschiedenen Schadstoffen beinhalten.

Je nach Schadstoff können auch andere Mechanismen der Adsorptionsvorgänge vorrangig sein. Diese hängen von den physikalisch-chemischen Eigenschaften der Komponenten ab, wie z.B. der Moleküldurchmesser. Entsprechend ist demnach auch das einzusetzende Adsorptionsmittel anzupassen (Verteilung der Poren/Kanaldurchmesser).

Das Additiv (Reagenz und Adsorptionsmittel) wird über einen Injektor, also mit Förderluft gespeisten Lanzen, im Gegenstrom zur Abgasrichtung unmittelbar vor oder nach dem Gaskonditionierer 1 eingedüst.

Eine effiziente Flugstromreaktion erfordert eine entsprechend homogene Verteilung des Additivs im Abgasstrom. Nur so wird sichergestellt, dass die Schadstoffmoleküle mit den Adsorptions/Reagenz in Kontakt (= Stoffaustausch) treten können (Vergrößerung der Auftreffenswahrscheinlichkeit). Dies wird bewerkstelligt, indem das frische Additiv und das Rezirkulat (alleine oder In Kombination) über mehrere über den Querschnitt verteilte Lanzen im Gegenstrom zur Abgasströmung eingedüst werden. Die Anzahl der Lanzen richtet sich nach dem Querschnitt des Gaskanals. Aufgrund der dadurch erreichten hohen Relativgeschwindigkeit von etwa 30-75 m/s wird ein intensiver Phasenkontakt erreicht und somit die erwünschte Bindung der Schadkomponenten im erheblichen Umfang bereits im Flugstrom erzielt.

Die homogene Verteilung des Additivs ist auch wichtig um eine homogene Mischung von Primärstaub aus der Sinteranlage und Additive in der Rohgaskammer 22 des Gewebefilters 3 zu bekommen. Das an dem Filtergewebe sich aufgrund hauptsächlich durch Oberflächenfiltration abscheidende Staubgemisch fungiert als Barriere für das bereits teilgereinigte Gas. Das Gas muss durch diese sich ausbildende Filterschicht hindurch"diffundieren". Dabei kommt es gezwungenermaßen auch zum Kontakt von Schadstoffmolekülen und Additivkörnem, wodurch eine weitere Reinigung des Abgasstromes erfolgt. Die Rezirkulatmenge beschleunigt auch den Aufbau eines dicken Filterkuchens und damit einer ausreichenden Stoffaustauschwirkung beim Durchdringen des Abgases durch die Schicht. Das Rezirkulat besteht im Unterschied zu den Staubpartikeln im Rohgasstrom bereits aus koagulierten Staubkömem. Somit ist die mittlere Korngröße des auf das Filtergewebe gelangenden Staubgemisches gegenüber dem Primärstaub wesentlich erhöht. Die Abscheidung demnach erleichtert.

Durch die Trennung der Gaskonditionierung, der Rezirkulat und/oder der Frisch-Additiveinbringung, können die Mengen jederzeit und einfach verändert werden (keine Abhängigkeit untereinander); z.B in Abhängigkeit von der Schadstoffkonzentration einer Komponente im Reingasstrom.

Beim Beispiel gemäß der Fig. wird 900 mg/Nm³ Reagenz zugegeben, die Zugabe von Adsorptionsmittel liegt etwa bei 100 mg/Nm³, sodass die Gesamtmenge an zugegebenem Adsorptionsmittel und Reagenz im Bereich bis 1000 mg/Nm³ liegt. Die Menge des Rezirkulats ist etwa das 10-30fache der Menge von Adsorptionsmittel plus Reagenz.

### Bezugszeichenliste:

- 1: Gaskonditionierer
- 2a: als Flugstromreaktor dienender Abgaskanal
- 2b: als Flugstromreaktor dienender Abgaskanal
- 3: Gewebefilter
- 4: Zugabeeinrichtung frisches Adsorptionsmittel/Reagenz
- 5: Zugabeeinrichtung Rezirkulat
- 6: Abgas
- 7: Silo für Reagenz
- 8: Silo für Adsorptionsmittel
- 9: Dosierbehälter für Reagenz
- 10: Dosierbehälter für Adsorptionsmittel
- 11: Reststoffsilo
- 12: Zufuhrleitung für Additiv
- 13: Druckluft
- 14: Stützgebläse
- 15: Reingasleitung zum Kamin
- 16: Luftverteiler
- 17: optionale Zuführeinrichtung für Rezirkulat
- 18: Wasserzufuhr
- 19: Druckluftzufuhr
- 20: optionale Zuführeinrichtung für frisches Adsorptionsmittet/Reagenz
- 21: Filtergehäuse
- 22: Rohgaskammer
- 23: Austragstrichter
- 24: Reingaskammer
- 25: Gasverteiterwand
- 26: Reststoffsilo
- 27: Zuführleitung für Rezirkulat
- 28: Verdünnungsluftgebläse
- 29: Druckluft
- 30: Umlenkbleche
- 31: Drehschurre

## Patentansprüche

1. Verfahren zur Behandlung von Abgas aus Sinteranlagen, bei welchem dem Abgas aus einer Sinteranlage in einem Abgaskanal (1, 2a, 2b) trockenes Additiv bestehend zumindest aus Adsorptionsmittel und Rezirkulat und gegebenenfalls zusätzlich Reagenz, wie Kalk oder Kalkhydrat, im Flugstromverfahren zugegeben wird und das Additiv anschließend aus dem Abgas durch Gewebefilter (3) abgeschleden und zumindest teilweise rezirkuliert wird, **dadurch gekennzeichnet, dass** das Additiv an zumindest einer Stelle (4, 5) entgegen der Strömungsrichtung des Abgases und zwar vor und/oder nach einer Erweiterung (1) des Abgaskanals eingebracht wind, wobei Rezirkulat einerseits und frisches Adsorptionsmittel und gegebenenfalls Reagenz andererseits an verschiedenen Stellen (4, 5, 17, 20) eingebracht werden, und wobei frisches Adsorptionsmittel und/oder Reagenz vor Rezirkulat eingebracht wird.

2. Verfahren nach Anspruch 1, **dadurch gekennzeichnet, dass** das Additiv mit einer Relativgeschwindigkeit von zumindest 30 m/s in das Abgas eingebracht wird,

3. Verfahren nach Anspruch 1 oder 2, **dadurch gekennzeichnet dass** das Abgas durch Eindüsen oder Zerstäuben von Wasser in den Abgasstrom unabhängig von der Zugebe von Additiv geregelt gekühlt und/oder befeuchtet wird.

4. Verfahren nach Anspruch 3, **dadurch gekennzeichnet, dass** das Wasser mit einer definierten maximalen Tropfengröße eingebracht wird.

5. Verfahren nach Anspruch 3, oder 4 **dadurch gekennzeichnet, dass** der maximale Tropfendurchmesser kleiner 200 µm ist.

6. Verfahren nach einem der Anspruche 1 bis 5, **dadurch gekennzeichnet, dass** Additiv zumindest in einem bestimmten Querschnitt des Abgaskanals (1, 2a, 2b) an mehreren über den Querschnitt verteilten Stellen eingebracht wird.

7. Verfahren nach einem der Ansprüche 1 bis 6, **dadurch gekennzeichnet, dass** Additiv an mehreren Stellen (4, 5, 17, 20) längs der Strömungsrichtung des Abgases eingebracht wird.

8. Verfahren nach einem der Ansprüche 1 bis 7, **dadurch gekennzeichnet, dass** Additiv Ober zumindest eine Lanze eingebracht wird.

9. Verfahren nach einem der Ansprüche 1 bis 8, **dadurch gekennzeichnet, dass** das Abgas durch Eindüsen oder Zerstäuben von Suspension oder Lösung, wie einer Suspension von Kalkhydrat in Wasser, in den Abgasstrom in einer Erweiterung (1) des Abgaskanals geregelt gekühlt und/oder befeuchtet wird.

10. Verfahren nach einem der Anspruche 1 bis 9, **dadurch gekennzeichnet, dass** Adsorptionsmittel in Abhängigkeit vom Anteil der kondensierbaren organischen Verbindungen und/oder der Schwermetalle eingebracht wird.

11. Verfahren nach einem der Ansprüche 1 bis 10, **dadurch gekennzeichnet, dass** in Abhängigkeit vom Anteil der sauren Bestandteile im Abgas Reagenz eingebracht und/oder das Abgas gekühlt und/oder befeuchtet wird.

12. Vorrichtung zur Durchführung des Verfahrens nach einem der Ansprüche 1 bis 11, die zumindest folgende Einrichtungen umfasst:
- einen Abgaskanal (1, 2a, 2b), der mit einer Sinteranlage verbunden ist,
- eine Einrichtung (4, 5, 17, 20) zum Zuführen von trockenem Additiv In den Abgasstrom,
- einen Gewebefilter (3), in welchen der Abgaskanal (2b) mündet,
- eine Einrichtung (5, 26, 27), mit welcher im Gewebefilter (3) abgeschiedenes Additiv als Rezirkulat in den Abgaskanal (2a, 2b) zurückgeführt wird,
**dadurch gekennzeichnet dass** sowohl vor als auch nach einer Erweiterung (1) des Abgaskanals zumindest eine Zuführeinrichtung (4, 5, 17, 20) angeordnet ist und dass die Zuführeinrichtungen (4, 5, 17, 20) so ausgebildet sind, dass das Additiv entgegen der Strömungsrichtung des Abgases eingebracht wird, wobei eine Zuführeinrichtung für frisches Adsorptionamittel und/oder Reagenz (4,20) In Strömungsrichtung des Abgases (6) gesehen vor einer Zufuhreinnchtung für Rezirkulat (5,17), welche über eine Zuführleitung (27) für Rezirkulat mit einem Dosiersystem (26) für Rezirkulat verbunden ist, angeordnet ist.

13. Vorrichtung nach Anspruch 12; **dadurch gekennzeichnet, dass** in zumindest einem bestimmten Querschnitt des Abgaskanals (1, 2a, 2b) an mehreren über den Querschnitt verteilten Stellen Öffnungen einer Zuführeinrichtung (4, 5, 17, 20) angeordnet sind.

14. Vorrichtung nach einem der Ansprüche 12 oder 13, **dadurch gekennzeichnet, dass** die Zuführeinrichtung (4,5,17,20) zumindest eine Lanze zum Einbringen des Additive aufweist.

15. Vorrichtung nach einem der Ansprüche 12 bis 14, **dadurch gekennzeichnet, dass** In der Erweiterung (1) eine Zufuhr (18, 19) von Wasser, Suspension oder Lösung mit einer definierten maximalen Tropfengröße vorgesehen ist.

16. Vorrichtung nach Anspruch 16, **dadurch gekennzeichnet, dass** eine Regelung vorgesehen ist, mit der unabhängig von einander die Mengen an Wasser, Suspension oder Lösung, die Menge an Rezirkulat und die Menge an frischem Additiv geregelt werden können, und zwar in Abhängigkeit von der Beschaffenheit des rohen und/oder des gereinigten Abgases.

## Claims

1. Process for treating flue gas from sintering plants, in which dry additive consisting at least of adsorbent and recirculated material and if appropriate additionally reagent, such as lime or lime hydrate, is added by the entrained-flow process to the flue gas from a sintering plant in a flue-gas duct (1, 2a, 2b), and the additive is then separated out of the flue gas by fabric filters (3) and at least partially recirculated, **characterized in that** the additive is introduced at least in one location (4, 5) in the opposite direction to the direction of flow of the flue gas, specifically upstream and/or downstream of a widened section (1) in the flue gas duct, recirculated material, on the one hand, and fresh adsorbent and if appropriate reagent, on the other hand, being introduced at different locations (4, 5, 17, 20), and fresh adsorbent and/or reagent being introduced before recirculated material.

2. Process according to Claim 1, **characterized in that** the additive is introduced into the flue gas with a relative velocity of at least 30 m/s.

3. Process according to Claim 1 or 2, **characterized in that** the flue gas is cooled and/or humidified in a controlled way by injection or atomization of water into the flue gas stream independently of the addition of additive.

4. Process according to Claim 3, **characterized in that** the water is introduced with a defined maximum drop size.

5. Process according to Claim 3 or 4, **characterized in that** the maximum drop diameter is less than 200 µm.

6. Process according to one of Claims 1 to 5, **characterized in that** additive, at least in a defined cross section of the flue gas duct (1, 2a, 2b), is introduced at a plurality of locations distributed over the cross section.

7. Process according to one of Claims 1 to 6, **characterized in that** additive is introduced at a plurality of locations (4, 5, 17, 20) along the direction of flow of the flue gas.

8. Process according to one of Claims 1 to 7, **characterized in that** additive is introduced via at least one lance.

9. Process according to one of Claims 1 to 8, **characterized in that** the flue gas is cooled and/or humidified in a controlled manner by injection or atomization of suspension or solution, such as a suspension of lime hydrate in water, into the flue gas stream in the widened section (1) in the flue gas duct.

10. Process according to one of Claims 1 to 9, **characterized in that** adsorbent is introduced as a function of the level of the condensable organic compounds and/or the heavy metals.

11. Process according to one of Claims 1 to 10, **characterized in that** reagent is introduced and/or the flue gas is cooled and/or humidified as a function of the level of the acidic constituents in the flue gas.

12. Apparatus for carrying out the process according to one of Claims 1 to 11, which comprises at least the following devices:
- a flue gas duct (1, 2a, 2b), which is connected to a sintering plant,
- a device (4, 5, 17, 20) for feeding dry additive into the flue gas stream,
- a fabric filter (3), into which the flue gas duct (2b) opens out,
- a device (5, 26, 27) which is used to return additive that is separated out in the fabric filter (3) to the flue gas duct (2a, 2b) as recirculated material,
**characterized in that** at least one feed device (4, 5, 17, 20) is arranged both upstream and downstream of a widened section (1) in the flue gas duct, and **in that** the feed devices (4, 5, 17, 20) are designed in such a way that the additive is introduced in the opposite direction to the direction of flow of the flue gas, a feed device for fresh adsorbent and/or reagent (4, 20) being arranged upstream as seen in the direction of flow of the flue gas (6), of a feed device for recirculated material (5, 17), which is connected by means of a feed line (27) for recirculated material to a metering system (26) for recirculated material.

13. Apparatus according to Claim 12, **characterized in that** in at least one defined cross section of the flue gas duct (1, 2a, 2b), openings of a feed device (4, 5, 17, 20) are arranged at a plurality of locations distributed over the cross section.

14. Apparatus according to either of Claims 12 and 13, **characterized in that** the feed device (4, 5, 17, 20) has at least one lance for introducing the additive.

15. Apparatus according to one of Claims 12 to 14, **characterized in that** a feed (18, 19) supplying water, suspension or solution with a defined maximum drop size is provided in the widened section (1).

16. Apparatus according to Claim 15, **characterized in that** a control unit is provided, by which the quantities of water, suspension or solution, the quantity of recirculated material and the quantity of fresh additive can be controlled independently of one another, specifically as a function of the condition of the untreated and/or purified flue gas.

## Revendications

1. Procédé de traitement des gaz de fumée d'installations de frittage, dans lequel un additif sec constitué d'au moins un agent d'absorption, de recirculat et éventuellement d'un réactif supplémentaire tel que de la chaux ou de la chaux hydratée est ajouté aux gaz de fumée d'une installation de frittage dans un canal (1, 2a, 2b) à gaz de fumée par un procédé d'écoulement en vol, l'additif étant ensuite séparé des gaz de fumée par des filtres (3) en tissu et étant au moins en partie recirculé,
**caractérisé en ce que**
l'additif est apporté en au moins un emplacement (4, 5) dans une direction opposée à la direction d'écoulement des gaz de fumée, en amont et/ou en aval d'un élargissement (1) du canal à gaz de fumée, le recirculat, d'une part, et l'agent d'adsorption frais et éventuellement le réactif, d'autre part, étant apportés en des emplacements (4, 5, 17, 20) différents, l'agent d'adsorption frais et/ou le réactif étant apportés en amont du recirculat.

2. Procédé selon la revendication 1, **caractérisé en ce que** l'additif est apporté dans les gaz de fumée à une vitesse relative d'au moins 30 m/s.

3. Procédé selon les revendications 1 ou 2, **caractérisé en ce qu'**indépendamment de l'addition de l'additif, les gaz de fumée sont refroidis et/ou humidifiés de manière régulée par injection ou pulvérisation d'eau dans l'écoulement de gaz de fumée.

4. Procédé selon la revendication 3, **caractérisé en ce que** l'eau est apportée en gouttes d'une taille maximale définie.

5. Procédé selon les revendications 3 ou 4, **caractérisé en ce que** le diamètre maximal des gouttes est inférieur à 200 µm.

6. Procédé selon l'une des revendications 1 à 5, **caractérisé en ce que** l'additif est apporté dans une section transversale définie du canal (1, 2a, 2b) à gaz de fumée en plusieurs emplacements répartis sur la section transversale.

7. Procédé selon l'une des revendications 1 à 6, **caractérisé en ce que** l'additif est apporté en plusieurs emplacements (4, 5, 17, 20) dans la direction d'écoulement des gaz de fumée.

8. Procédé selon l'une des revendications 1 à 7, **caractérisé en ce que** l'additif est apporté par au moins une lance.

9. Procédé selon l'une des revendications 1 à 8, **caractérisé en ce que** les gaz de fumée sont refroidis et/ou humidifiés de manière régulée dans un élargissement (1) du canal à gaz de fumée en injectant ou en pulvérisant dans l'écoulement de gaz de fumée une suspension ou une solution, par exemple une suspension de chaux hydratée dans de l'eau.

10. Procédé selon l'une des revendications 1 à 9, **caractérisé en ce que** l'agent d'adsorption est apporté en fonction de la teneur en composés organiques condensables et/ou en métaux lourds.

11. Procédé selon l'une des revendications 1 à 10, **caractérisé en ce qu'**un réactif est apporté et/ou **en ce que** les gaz de fumée sont refroidis et/ou humidifiés en fonction de la teneur des gaz de fumée en composants acides.

12. Dispositif en vue de l'exécution du procédé selon l'une des revendications 1 à 11, qui présente au moins les systèmes suivantes :
- un canal (1, 2a, 2b) à gaz de fumée relié à une installation de frittage,
- un système (4, 5, 17, 20) d'amenée d'additif sec dans l'écoulement de gaz de fumée,
- un filtre (3) en tissu dans lequel débouche le canal (2b) à gaz de fumée,
- un système (5, 26, 27) par lequel un additif déposé dans le filtre (3) en tissu est renvoyé comme recirculat dans le canal (2a, 2b) à gaz de fumée,
**caractérisé en ce que**
au moins un système d'amenée (4, 5, 17, 20) est disposé tant en amont qu'en aval d'un élargissement (1) du canal à gaz de fumée,
**en ce que** les dispositifs d'amenée (4, 5, 17, 20) sont configurés de telle sorte que l'additif est apporté en opposition à la direction d'écoulement des gaz de fumée, un système d'amenée d'agent d'adsorption frais et/ou de réactif (4, 20) étant disposé dans la direction d'écoulement des gaz de fumée (6) en amont d'un système d'amenée de recirculat (5, 17) qui est relié par un conduit d'amenée (27) de recirculat à un système (26) de dosage du recirculat.

13. Dispositif selon la revendication 12, **caractérisé en ce que** des ouvertures d'un système d'amenée (4, 5, 17, 20) sont disposées dans au moins une section transversale définie du canal (1, 2a, 2b) à gaz de fumée en plusieurs emplacements répartis sur la section transversale.

14. Dispositif selon l'une des revendications 12 ou 13, **caractérisé en ce que** le système d'amenée (4, 5, 17, 20) présente au moins une lance pour amener l'additif.

15. Dispositif selon l'une des revendications 12 à 14, **caractérisé en ce que** dans l'élargissement (1) est prévue une amenée (18, 19) d'eau, d'une suspension ou d'une solution, en gouttes d'une taille maximale définie.

16. Dispositif selon la revendication 15, **caractérisé en ce qu'**il présente une régulation par laquelle le débit d'eau, de suspension ou de solution, le débit de recirculat et le débit d'additif frais peuvent être régulés indépendamment les uns des autres en fonction de la nature des gaz de fumée bruts et/ou des gaz de fumée épurés.
